(19) Europäisches Patentamt
European Patent Office
Office européen des brevets

(11) EP 3 206 841 B1

(12) FASCICULE DE BREVET EUROPEEN

(45) Date de publication et mention de la délivrance du brevet:
07.11.2018 Bulletin 2018/45

(51) Int Cl.:
B25J 9/10 (2006.01)      B25J 15/00 (2006.01)

(21) Numéro de dépôt: 15784602.3

(22) Date de dépôt: 14.10.2015

(86) Numéro de dépôt international:
PCT/EP2015/073800

(87) Numéro de publication internationale:
WO 2016/059121 (21.04.2016 Gazette 2016/16)

(54) **DOIGT ROBOTIQUE MODULAIRE POUR LA PREHENSION ET LA MANIPULATION DEXTRE**

MODULARER ROBOTERFINGER ZUM GREIFEN UND GESCHICKTEN HANDHABEN

MODULAR ROBOTIC FINGER FOR GRASPING AND DEXTEROUS HANDLING

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 16.10.2014 FR 1459956

(43) Date de publication de la demande:
23.08.2017 Bulletin 2017/34

(73) Titulaires:
• Centre National de la Recherche Scientifique (CNRS)
75016 Paris (FR)
• Universite De Poitiers
86000 Poitiers (FR)

(72) Inventeurs:
• RIVIERE, Thomas
44230 Saint-Sébastien-sur-Loire (FR)
• ARSICAULT, Marc
F-86360 Montamise (FR)
• GAZEAU, Jean-Pierre
F-86100 Chatellerault (FR)
• VULLIEZ, Philippe
F-86800 Lavoux (FR)
• ZEGHLOUL, Saïd
F-86800 Terce (FR)

(74) Mandataire: IPAZ
Parc Les Algorithmes, Bâtiment Platon
CS 70003 Saint-Aubin
91192 Gif-sur-Yvette Cedex (FR)

(56) Documents cités:
CN-A- 101 045 300      JP-A- S62 228 391
US-A- 5 062 673

• HASHIMOTO H ET AL: "AN UNILATERAL MASTER-SLAVE HAND SYSTEM WITH A FORCE-CONTROLLED SLAVE HAND", PROCEEDINGS OF THE INTERNATIONAL CONFERENCE ON ROBOTICS AND AUTOMATION. NAGOYA,JAPAN, MAY 21 - 27, 1995; [PROCEEDINGS OF THE INTERNATIONAL CONFERENCE ON ROBOTICS AND AUTOMATION], NEW YORK, IEEE, US, 21 mai 1995 (1995-05-21), pages 956-961, XP000657286, DOI: 10.1109/ROBOT.1995.525406 ISBN: 978-0-7803-1966-0

## Description

## DOMAINE TECHNIQUE

La présente invention concerne le domaine des doigts robotiques.

On entend par « doigt robotique », un ensemble de moyens mécaniques articulés entre eux de manière similaire aux phalanges des doigts d'une main et commandés à déplacement par des actionneurs pilotés par des moyens externes, tels que des automatismes ou des processeurs.

Comme on le verra par la suite, dans le cadre de la présente invention, différents doigts peuvent être combinés pour former une pince, voire une main robotique.

## BUT DE L'INVENTION

Le but de la présente invention est d'améliorer les performances des dispositifs connus de mains robotisées, notamment quant à la saisie d'objets d'une part, et la manipulation fine d'objets en bout de doigt d'autre part.

Un but de l'invention est notamment de proposer des moyens permettant de réaliser une cinématique identique à celle d'un doigt humain.

## ETAT DE LA TECHNIQUE

La réalisation de doigts ou mains robotiques a déjà donné lieu à une littérature très abondante.

On trouvera des exemples dans les documents suivants :

Grebenstein M., « Approaching human performance: the functionality driven Awiwi Robot Hand » , Diss. ETH N°20471, 2012.

Iversen E.K., Khutti D.F., Johnson R.T., Biggers K.B., Jacobsen S.C., "Design of the UTAH/MIT dexterous hand," in International Conference on Robotics and Automation, 1986, pp. 1520-1532.

Liu et Al., « Multisensory Five-Finger Dexterous Hand: The DLR/HIT Hand II », IEEE/RSJ International Conference on Intelligent Robots and Systems, 2008.

S. Ueki, H. Kawasaki, T. Mouri, "Adaptive Coordinated Control of Multi-Fingered Robot Hand", Journal of Robotics and Mechatronics, Vol.21 No.1, 2009.

Jun Ueda, Yutaka Ishida, Masahiro Kondo, Tsukasa Ogasawara, "Development of the NAIST-Hand with Vision-based Tactile Fingertip Sensor", Proceedings of the 2005 IEEE International Conference on Robotics and Automation (ICRA 2005), pp.2343-2348, 2005.

N. Daoud, J.P. Gazeau, , S. Zeghloul, M. Arsicault, « A real-time strategy for dexterous manipulation: Fingertips motion planning, force sensing and grasp stability », Journal of Robotics and Autonomous Systems, Vol. 60, March 2012, pp.377-386.

J.P. Gazeau, S. Zeghloul, G. Ramirez, «Manipulation with a polyarticulated mechanical hand: a new efficient real-time method for computing fingertip forces for a global manipulation strategy », Robotica, vol.23, 2005, pp.479-490.

D. Chaigneau, M. Arsicault, J.P. Gazeau, S. Zeghloul, « LMS robotic hand grasp and manipulation planning (an isomorphic skeleton approach », Robotica (2008), vol.26, 2008, pp.177-188.

N. Daoud, J.P. Gazeau, , S. Zeghloul, M. Arsicault, « A fast grasp synthesis method for online manipulation », Journal of Robotics and Autonomous Systems, vol.59, 2011, pp.421-427.

F. Touvet, N. Daoud, J.P. Gazeau, , S. Zeghloul, M.A. Maier, S. Eskiizmirliler, « A biomimetic reach and grasp approach for mechanical hand », Journal of Robotics and Autonomous Systems, vol.60, 2012, pp.473-486.

Sans commenter dans le détail l'ensemble des solutions déjà proposées, on citera ci-dessous deux types de mains robotiques fréquemment citées dans la littérature et dénommées généralement « Main de Shadow « et «main AWIWI ».

Main de Shadow

La main de SHADOW est une main robotique au design anthropomorphique, dont les dimensions sont comparables à une main humaine. Elle comporte des actionneurs qui peuvent être des vérins pneumatiques ou des moteurs électriques suivant le mode de réalisation. Les articulations sont actionnées via une transmission par câbles. La main avec ses 5 doigts possède 20 degrés de liberté actionnés et 4 degrés de liberté couplés pour un total de 24 articulations. Les amplitudes de mouvement sont très proches des amplitudes de la main humaine.

Bien que présentant un réel intérêt la main dite de Shadow présente certaines limitations. La mécanique de la main ne permet pas de piloter finement l'extrémité des doigts dans l'espace. En effet le mouvement d'abduction-adduction est le siège de non linéarités (jeux mécaniques, frottement), qui empêchent de produire des mouvements précis des doigts pour manipuler des objets en bout de doigt en exploitant ce mouvement (vissage d'ampoule par exemple)

Main AWIWI ou main hyper-robuste

L'Institut de Robotique et de Mécatronique du Centre Aérospatial Allemand (DLR) a développé une main capable de résister à des collisions avec des objets rigides ainsi qu'à des coups de marteau sans craindre aucune altération de la mécanique de la main. La robustesse de la main a été placée au coeur de l'invention. La main développée possède des dimensions anthropomorphes munie de ses 5 doigts. Ces derniers comportent un total de 19 articulations qui sont actionnés via 38 tendons connectés chacun à un actionneur. Le pilotage des 38 actionneurs permet ainsi de contrôler en permanence la raideur des tendons et d'absorber des chocs importants.

L'inconvénient essentiel de cette main est le degré d'actionnement élevé, dans la mesure où la conception requiert deux actionneurs par articulation afin de contrôler la raideur du doigt. Il en résulte un dimensionnement et un poids importants avec un avant-bras volumineux. Le frottement important impacte également la capacité de la main à produire des mouvements fins à l'extrémité des doigts. Ainsi à ce jour les démonstrations de manipulation fine d'objets en bout de doigt avec cette main sont inexistantes. Les démonstrations proposées démontrent des saisie adaptative et des capacités d'interaction importantes dans la mesure où la main est capable d'absorber des chocs.

Un dernier exemple divulgue un dispositif selon le préambule de la revendication 1 :
HASHIMOTO H ET AL: "AN UNILATERAL MASTER-SLAVE HAND SYSTEM WITH A FORCE-CONTROLLED SLAVE HAND",PROCEEDINGS OF THE INTERNATIONAL CONFERENCE ON ROBOTICS AND AUTOMATION. NAGOYA,JAPAN, MAY 21 - 27, 1995; [PROCEEDINGS OF THE INTERNATIONAL CONFERENCE ON ROBOTICS AND AUTOMATION], NEW YORK, IEEE, US, 21 mai 1995 (1995-05-21), pages 956-961.

## DESCRIPTION DE L'INVENTION

L'invention concerne un dispositif formant un doigt robotique comportant une embase formant une paume, au moins une phalange articulée sur l'embase autour de deux articulations indépendantes non parallèles entre elles, au moins deux actionneurs des moyens de liaison à base de câble reliant respectivement les deux actionneurs à des éléments d'entraînement desdits deux articulations, et des moyens de guidage adaptés pour guider les câbles intervenant dans la commande de chaque articulation située après la première articulation sur l'embase, dans un plan commun passant par l'axe de cette première articulation caractérisé en ce que les moyens de guidage sont formés d'aiguilles cylindriques s'étendant selon des axes parallèles au premier axe d'articulation, portées par l'embase, que le dispositif comprend au moins deux aiguilles en sortie d'un étage de guidage dont l'écartement correspond sensiblement, au jeu fonctionnel près requis pour assurer une libre translation des câbles et, au diamètre de ceux-ci, les deux aiguilles étant disposées symétriquement de part et d'autre d'un plan de symétrie passant par le premier axe d'articulation et guidant les câbles en entrée de la première articulation, et que le dispositif comprend en outre un cadre qui porte deux séries d'au moins une pièce en diabolo symétriques par rapport à l'axe de la première articulation et destinées à guider les câbles en provenance de l'étage de guidage formé par lesdites aiguilles, vers au moins une articulation avale.

De préférence le premier axe d'articulation sur l'embase constitue un axe d'abduction - adduction, tandis que le deuxième axe d'articulation constitue un axe de flexion - extension.

La caractéristique mentionnée ci-dessus selon laquelle les câbles intervenant dans la commande de chaque articulation située après la première articulation sur l'embase, sont guidés dans un plan commun passant par le premier axe d'articulation, permet de ne pas modifier l'allongement de ces câbles entre l'actionneur et l'articulation correspondante quelle que soit la position de la première articulation et permet également de minimiser les frottements. Ceci permet de maximiser le rendement mécanique et de garantir la capacité à contrôler le doigt en effort et en position. Par ailleurs, la combinaison de ce guidage des câbles dans un plan commun en entrée de la première articulation avec les pièces en diabolo portées par le cadre permet de minimiser le frottement des câbles intervenant dans la commande de chaque articulation située après la première articulation, quelle que soit l'amplitude de pivotement de la première articulation.

Selon une autre caractéristique avantageuse de la présente invention, le dispositif comprend plusieurs phalanges articulées entre elles deux à deux autour d'une articulation à axe unique associée à un actionneur respectif.

Selon un mode de réalisation particulier le dispositif comporte quatre articulations et trois phalanges. Les mouvements alors proposés sont trois mouvements de flexion-extension et un mouvement d'abduction-adduction.

La transmission de mouvement entre chaque articulation et l'actionneur associé est assurée par deux câbles de transmission, qui permettent d'assurer respectivement un mouvement de flexion ou d'abduction et un mouvement d'extension ou d'adduction.

Les dimensions du doigt peuvent être adaptées en fonction de l'application cible. Ces dimensions peuvent à minima correspondre aux dimensions moyennes d'un doigt humain.

La structure du doigt conforme à l'invention permet d'installer une instrumentation complète de mesure d'effort et de position.

Chaque articulation peut intégrer une mesure articulaire.

Le bout de doigt et les phalanges peuvent accueillir une mesure d'effort.

Un habillage personnalisé de la structure du doigt, par exemple sous forme d'une coque et d'un revêtement liés à l'application, peut être réalisé grâce à des éléments de fixation.

La modularité de chaque doigt permet d'assembler plusieurs doigts pour construire une main robotique à plusieurs doigts. La cinématique de la main (implantation des doigts, nombre des doigts, dimensions des doigts, notamment longueur des phalanges) peut être adaptée en fonction de l'application cible. On peut ainsi réaliser la main robotique la plus complexe : une main anthropomorphe en termes de cinématique et de dimensions.

## AVANTAGES DE L'INVENTION

Les avantages du dispositif conforme à l'invention comprenant une transmission par câbles sont notamment les suivants :

- les actionneurs ou moteurs peuvent être déportés hors du dispositif, par exemple hors de la main, d'où la possibilité de réduire la taille du dispositif et de la main et leur poids pour une utilisation embarquée ;
- les actionneurs ou moteurs peuvent être dimensionnés aisément en fonction de l'application. Les contraintes dimensionnelles liées aux moteurs sont inexistantes. Si des couples élevés sont nécessaires, des moteurs volumineux peuvent être choisis. Ils peuvent par exemple être positionnés au niveau de l'épaule d'un bras manipulateur, dont la charge utile est naturellement plus importante que pour l'extrémité d'un bras, via un routage judicieux des câbles de transmission ;
- la compliance naturelle induite par chaque câble au niveau d'un doigt offre une interaction sûre avec l'environnement en absorbant une partie de l'énergie liée à l'impact ;
- les contraintes en allongement d'un câble de transmission peuvent être exploitées afin d'évaluer l'effort d'interaction entre le doigt et l'environnement.

## DESCRIPTION DES FIGURES

D'autres caractéristiques, buts et avantages de la présente invention apparaîtront à la lecture de la description détaillée qui va suivre, et en regard des dessins annexés, donnés à titre d'exemples non limitatifs et sur lesquels :

- la figure 1 montre sur ses figures 1a et 1b qui correspondent arbitrairement à un plan de coupe sagittal et à un plan de coupe transverse, différents axes des mouvements réalisables par le doigt conforme à l'invention et un repère orthonormé qui seront pris en référence dans la suite de la description,
- la figure 2 représente un schéma des liaisons articulées contenues dans un doigt conforme à l'invention,

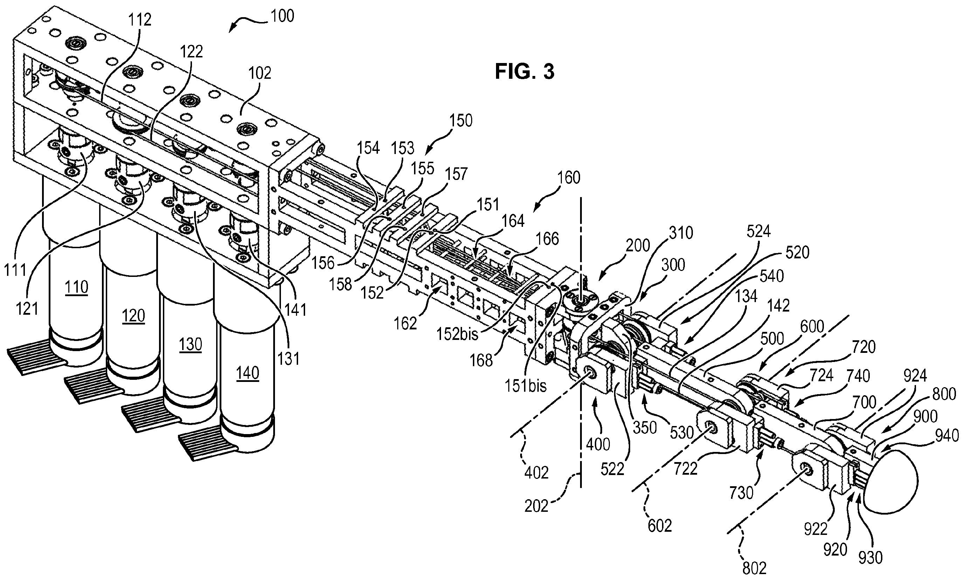

- la figure 3 illustre une vue en perspective d'un mode de réalisation d'un doigt conforme à l'invention comprenant 3 phalanges,

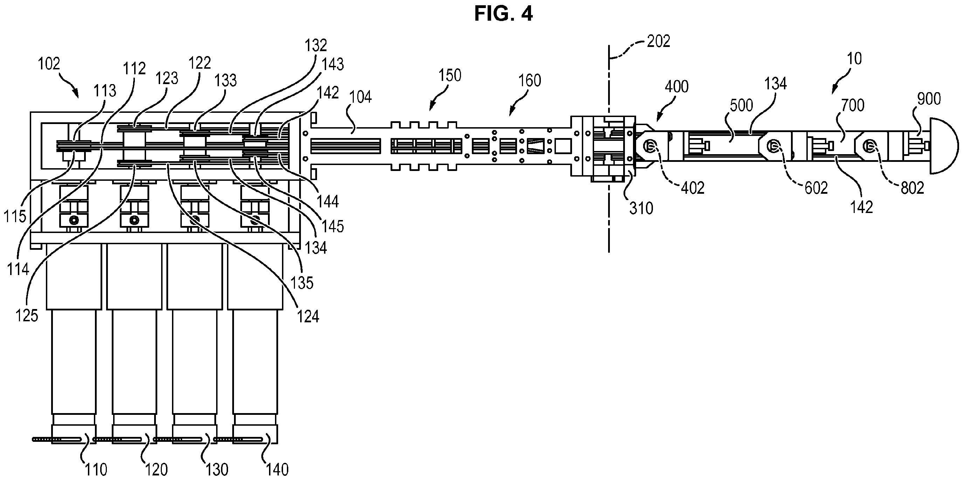

- la figure 4 représente une vue du même doigt selon une vue latérale correspondant à un plan parallèle à un plan sagittal,

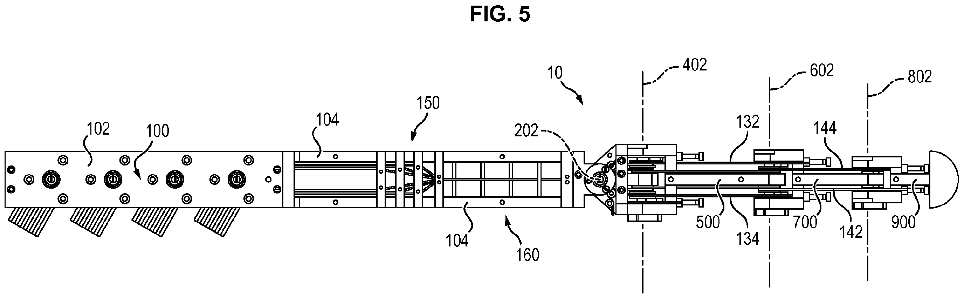

- la figure 5 représente une vue du même doigt selon une vue de dessus correspondant à un plan parallèle à un plan transverse,
- la figure 6 représente une vue partielle agrandie de la figure 5 et illustre un premier étage de moyens de guidage des câbles situé dans l'embase formant paume, en amont de la première articulation,
- la figure 7 représente une vue partielle agrandie de la figure 4 et illustre un deuxième étage de moyens de guidage des câbles situé dans l'embase formant paume, entre le premier étage illustré sur la figure 6 et la première articulation,

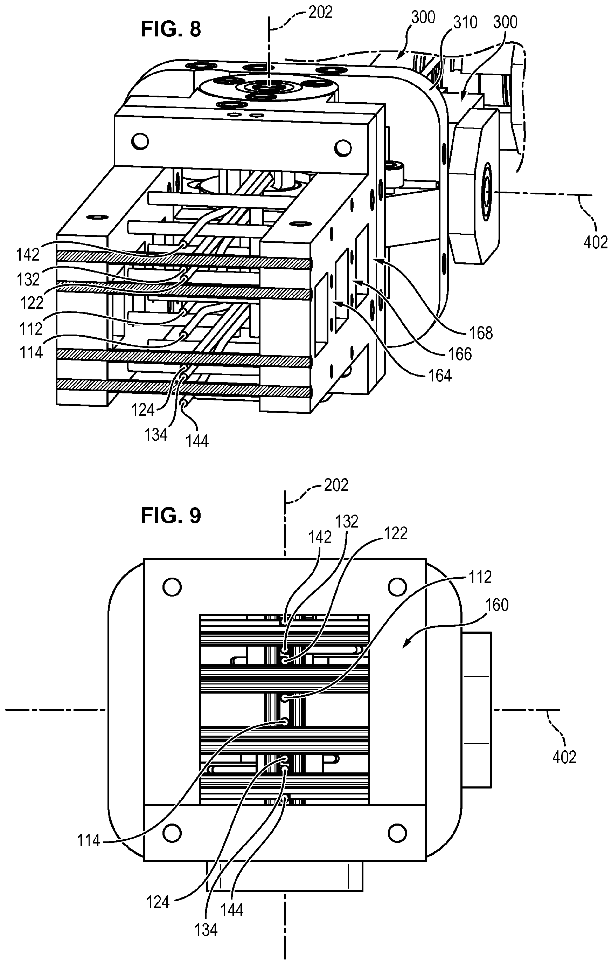

- la figure 8 détaille selon une vue en perspective la disposition d'aiguilles cylindriques servant au guidage des câbles de transmission sur l'entrée de la première articulation,
- la figure 9 représente une vue en bout selon un plan de coupe frontal, des mêmes aiguilles,
- la figure 10 représente une vue partielle en perspective de l'ensemble d'articulation de la première phalange sur l'embase, autour de deux axes non parallèles entre eux, correspondant à des axes d'abduction-adduction et de flexion-extension,
- la figure 11 représente une vue de détail partiel de cet ensemble et illustre plus précisément un demi arbre équipé de diabolos servant de guidage pour les câbles,
- la figure 12 représente une vue d'une cage support des diabolos précités et d'une poulie d'entraînement,
- la figure 13 représente une vue complète d'un arbre d'articulation correspondant au premier axe d'articulation sur l'embase,
- la figure 14 représente une deuxième vue partielle en perspective, selon un angle d'observation opposé à la figure10, de l'ensemble d'articulation de la première phalange sur l'embase, autour de deux axes non parallèles entre eux, correspondant à des axes d'abduction-adduction et de flexion-extension,
- la figure 15 représente une vue en perspective de l'ensemble complet d'articulation de la première phalange sur l'embase, autour de deux axes non parallèles,
- la figure 16 représente une vue de dessus de l'ensemble complet d'articulation de la première phalange sur l'embase, autour de deux axes non parallèles,

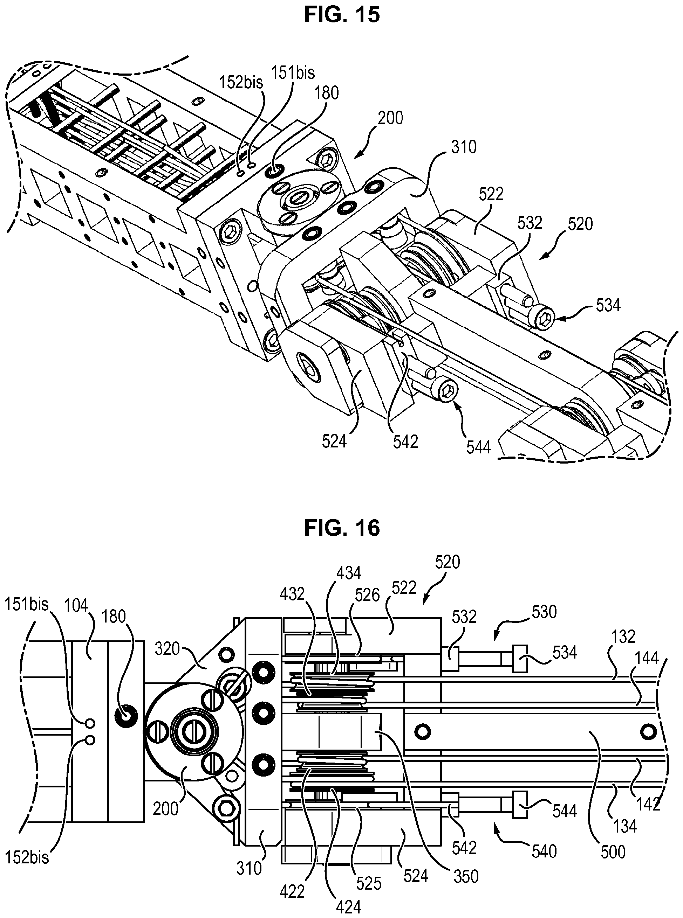

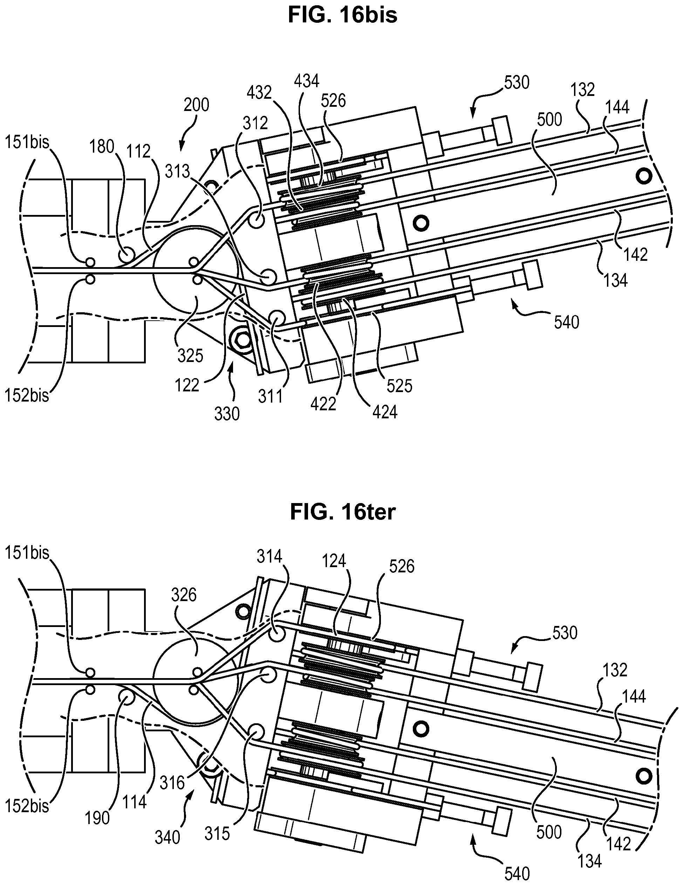

- les figures 16bis et 16ter représentent deux vues schématiques en coupe des deux premières articulations selon deux plans de coupe superposés, parallèles entre eux et orthogonaux au premier axe d'articulation,

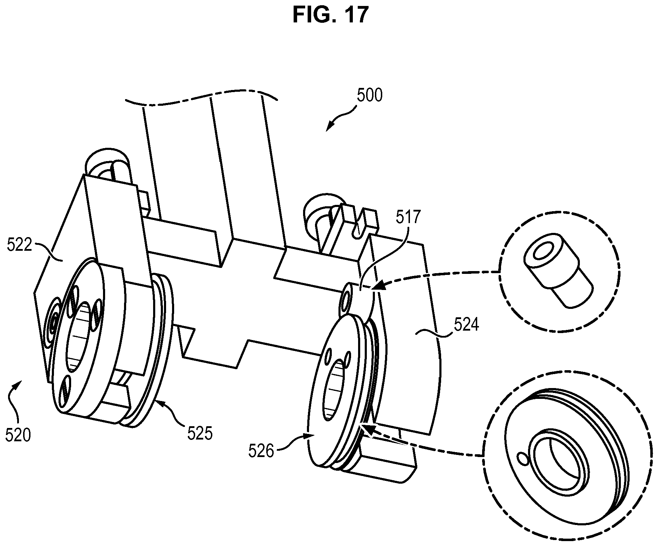

- la figure 17 représente une vue partielle en perspective d'une articulation entre deux phalanges, et illustre notamment des poulies réceptrices participant à l'entrainement et des dispositifs de réglage de la tension des câbles,

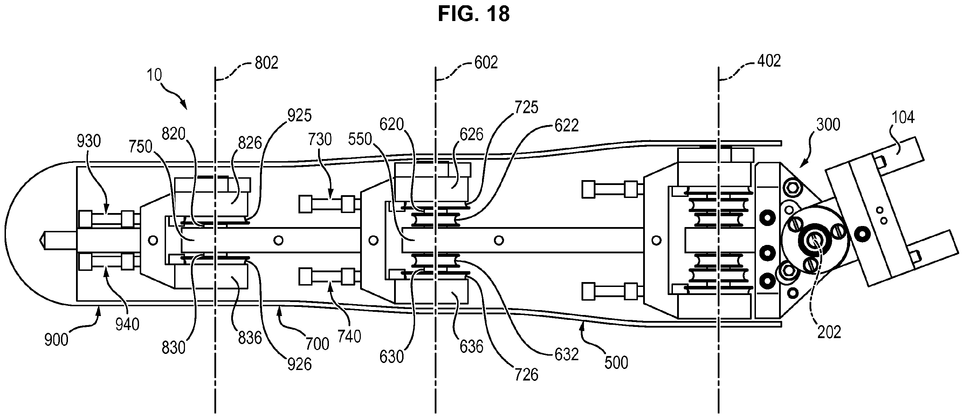

- la figure 18 représente une vue de dessus d'un doigt complet comprenant trois phalanges,

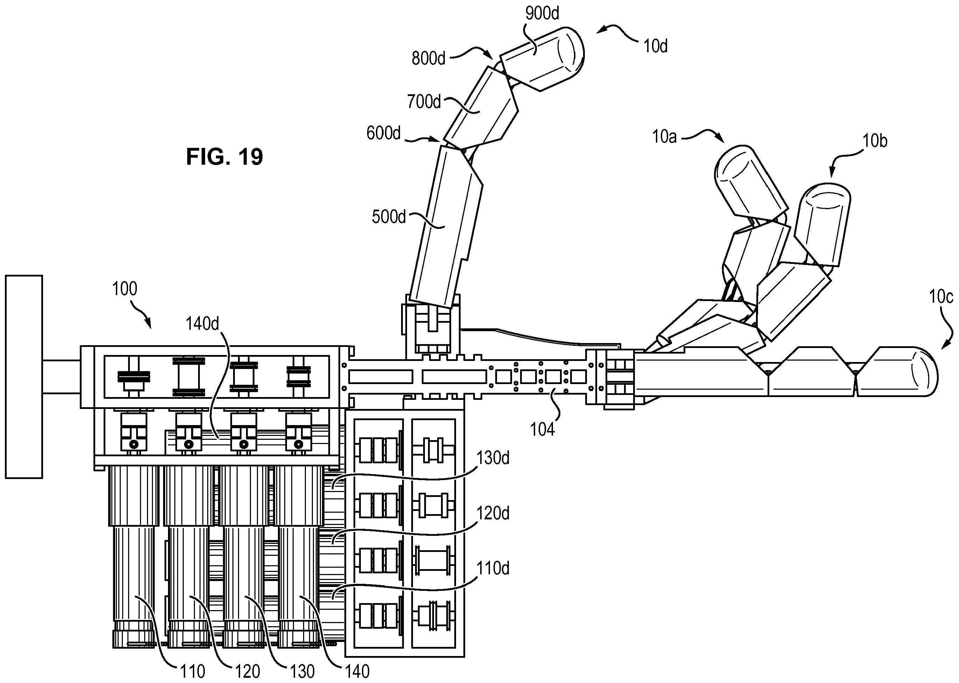

- la figure 19 représente une vue latérale selon un plan sagittal d'une main à plusieurs doigts conforme à l'invention, et

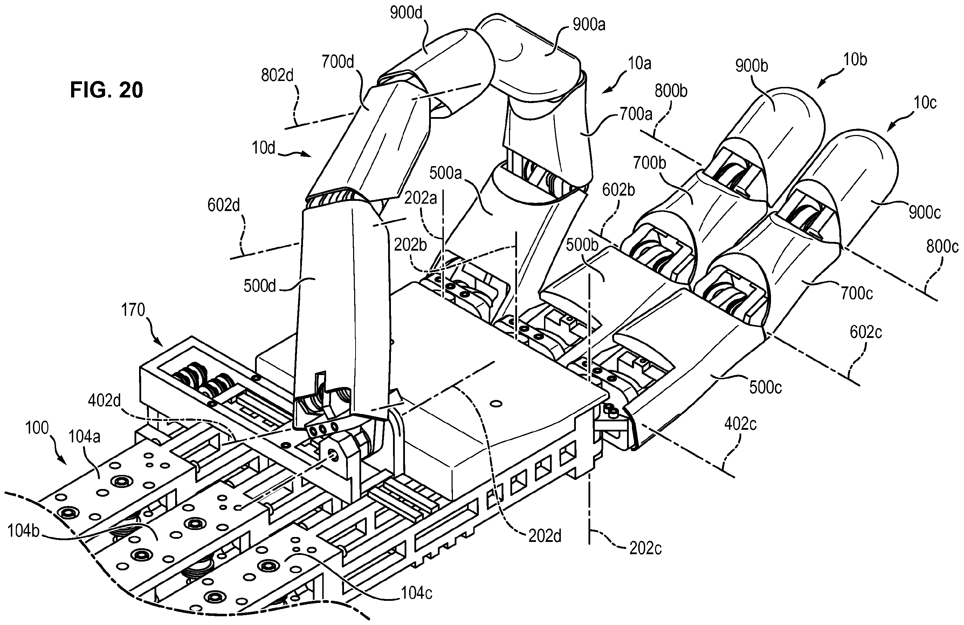

- la figure 20 illustre en perspective un exemple de réalisation d'une main à 4 doigts conforme à l'invention, avec préhension possible.

## DESCRIPTION DETAILLEE DE L'INVENTION

La description qui va suivre sera faite en regard d'un repère orthonormé arbitraire x y z dans lequel le plan x z correspond à un plan sagittal vertical, le plan x y correspond à un plan transverse horizontal et le plan y z correspond à un plan frontal vertical.

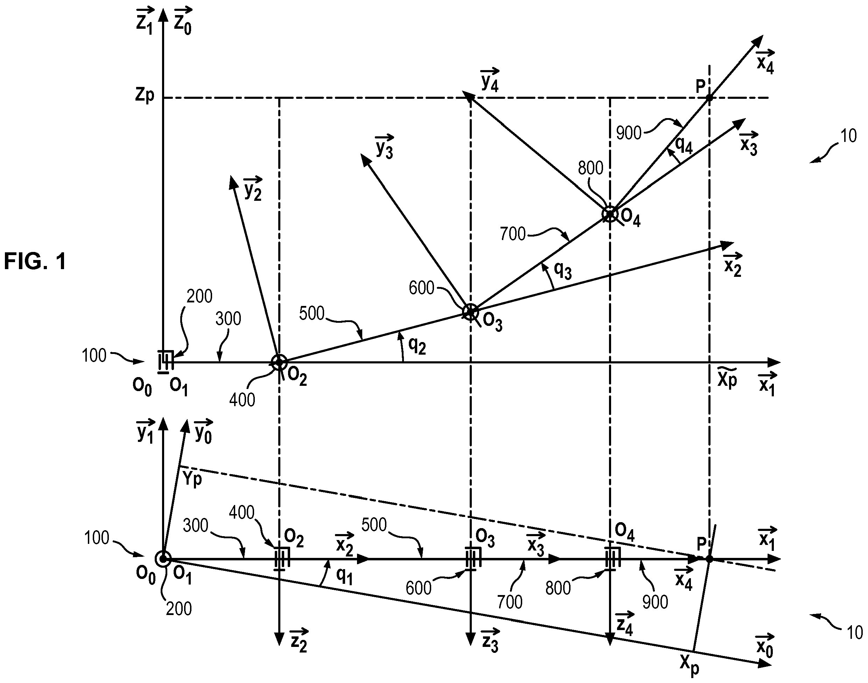

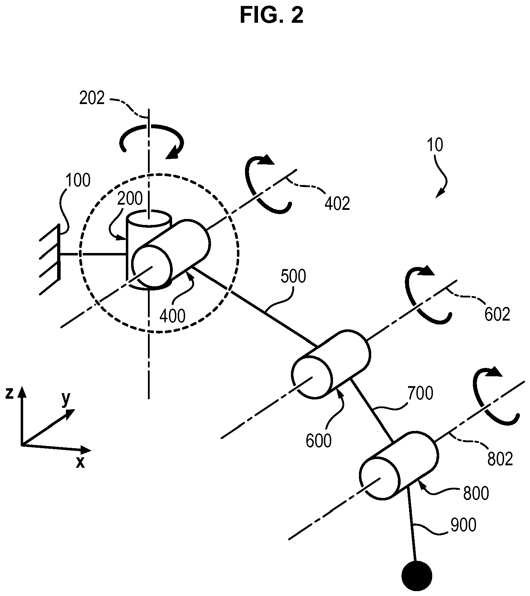

On a schématisé sur les figures 1a, 1b et 2, un doigt 10 comprenant trois phalanges 500, 700 et 900 : une première phalange 500 articulée sur une embase qui sera référencée 100 par la suite autour d'une première articulation 200 définissant un premier axe d'abduction - adduction 202 et d'une deuxième articulation 400 définissant un deuxième axe de flexion - extension 402, liée à l'articulation 200 via un ensemble intermédiaire 300, la deuxième phalange 700, intermédiaire, étant articulée sur la première phalange 500 par une articulation 600 définissant un troisième axe de flexion - extension 602 et la troisième phalange 900, distale, étant articulée sur la deuxième phalange 700 par une articulation 800 définissant un quatrième axe de flexion - extension 802.

L'axe d'abduction - adduction 202 s'étend selon un axe vertical z.

Les axes de flexion - extension 402, 602 et 802 s'étendent selon des axes horizontaux y parallèles entre eux.

Au repos, en position globalement alignées, les 3 phalanges 500, 700 et 900 s'étendent selon une direction d'élancement en x.

L'amplitude du déplacement en abduction ou adduction autour de l'axe 202 est noté q1 sur la figure 1b par rapport à un axe arbitraire médian de référence x.

Les amplitudes respectives de déplacement en flexion autour des axes respectifs 402, 602 et 802 des trois phalanges 500, 700 et 900 par rapport à une position de repos d'extension rectiligne sont référencées q2, q3 et q4.

Comme indiqué précédemment un doigt robotique élémentaire 10 conforme à la présente invention comprend une embase 100 formant une paume et au moins une phalange 500 articulée sur l'embase 100 autour de deux axes d'articulation 202 et 402 indépendants et non parallèles entre eux. De préférence les deux axes 202 et 402 sont orthogonaux entre eux.

Le doigt 10 comprend en outre au moins deux actionneurs 110 et 120 et des moyens de liaison à base de câble 112, 114 et 122, 124 reliant respectivement la sortie de l'actionneur 110 à des poulies réceptrices d'entraînement 325, 326 prévues sur l'ensemble 300 pour la commande de la première articulation 200 et la sortie de l'actionneur 120 à la première phalange 500 pour la commande de la deuxième articulation 400.

Dans le mode de réalisation comprenant 3 phalanges 500, 700 et 900, le doigt comprend 4 actionneurs 110, 120, 130 et 140 associés chacun à deux câbles 112, 114 ; 122, 124 ; 132, 134 et 142, 144. Chacun des câbles 112, 114 ; 122, 124 ; 132, 134 et 142, 144 est relié respectivement à une poulie réceptrice d'entraînement 325, 326 ou un élément, en l'espèce des poulies 525, 526, 725, 726 et 925, 926, des phalanges 500, 700 et 900 pour la commande d'un axe d'articulation 202, 402, 602 et 802.

Plus précisément encore selon l'invention, le doigt comprend des moyens de guidage 150, 160 adaptés pour guider les câbles 122, 124 ; 132, 134 et 142, 144 intervenant dans la commande de chaque articulation 400, 600 et 800 située après le premier axe d'articulation 202 sur l'embase, dans un plan sagittal commun passant par ce premier axe d'articulation 202.

L'embase 100 peut faire l'objet de nombreux modes de réalisation. Selon le mode de réalisation représenté sur les figures annexée, l'embase 100 comprend un boitier 102 qui porte les actionneurs 110, 120, 130 et 140 de sorte que ceux-ci aient leur axe de sortie 111, 121, 131 et 141 respectif monté à rotation dans le boitier 102, selon un axe parallèle à l'axe z.

Les actionneurs 110, 120, 130 et 140 sont de préférence formés de motoréducteurs.

Chaque axe de sortie 111, 121, 131 et 141 porte deux poulies motrices étagées axialement 113, 115, 123, 125, 133, 135, 143 et 145 sur leur axe respectif.

Le boitier 102 se prolonge d'un côté par une poutre 104 qui s'étend selon une direction longitudinale centrée sur un axe d'élancement en x. Cet axe d'élancement de la poutre 104, correspond à un plan médian de symétrie de la poutre qui passe par l'ensemble des axes de rotation des quatre actionneurs 110, 120, 130 et 140.

Une première extrémité de chaque câble 112, 114 ; 122, 124 ; 132, 134 et 142, 144 est fixée à une poulie respective 113, 115, 123, 125, 133, 135, 143 et 145.

Les poulies 113, 115, 123, 125, 133, 135, 143 et 145 sont situées en regard de la poutre 104.

Les câbles 112, 114; 122, 124; 132, 134 et 142, 144 cheminent dans la poutre 104 à partir de leur poulie respective 113, 115, 123, 125, 133, 135, 143 et 145 en direction de la première articulation 200.

Comme indiqué précédemment la poutre 104 comprend deux étages 150, 160 de moyens de guidage adaptés pour guider les câbles 112, 114 ; 122, 124 ; 132, 134 et 142, 144.

Le premier étage 150 de moyens de guidage a pour fonction de guider au moins les câbles 122, 124 ; 132, 134 et 142, 144 intervenant dans la commande de chaque articulation 400, 600 et 800 située après le premier axe d'articulation 202 sur l'embase, dans un plan sagittal commun passant par le premier axe d'articulation 202. Selon le mode de réalisation représenté sur les figures les moyens de guidage 150 sont formés d'aiguilles cylindriques s'étendant selon des axes parallèles à l'axe z portées par la poutre 104.

Il est ainsi prévu au moins deux aiguilles principales 151, 152 en sortie du premier étage 150 dont l'écartement correspond sensiblement, au jeu fonctionnel près requis pour assurer une libre translation des câbles 112, 114 ; 122, 124 ; 132, 134 et 142, 144, au diamètre de ceux-ci. Les deux aiguilles principales 151, 152 sont disposées symétriquement de part et d'autre du plan de symétrie en xz de la poutre 104 passant par le premier axe d'articulation 202.

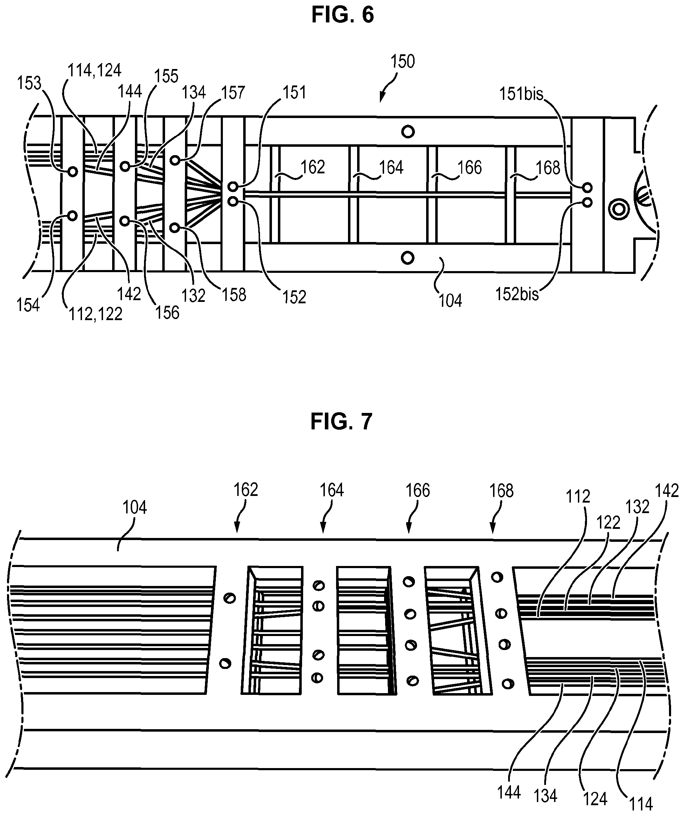

En entrée de l'étage 150, les câbles 112, 114 ; 122, 124 ; 132, 134 et 142, 144, sont séparés deux à deux d'une distance correspondant au cumul des rayons respectifs de leur poulie respective 113, 115, 123, 125, 133, 135, 143 et 145. Comme on le voit sur la figure 6, les aiguilles principales 151, 152 permettent de placer l'ensemble des câbles 112, 114 ; 122, 124 ; 132, 134 et 142, 144, dans le plan commun passant par l'axe 202, en sortie de l'étage 150 de guidage.

Comme on le voit également sur la figure 6 de préférence le dispositif comprend en outre trois étages d'aiguilles auxiliaires 153, 154 ; 155, 156 et 157, 158, en amont des aiguilles principales 151 et 152, qui retiennent respectivement certains câbles 112, 114 ; 122, 124 ; 132, 134 et 142, 144, afin d'assurer une convergence progressive de paires de câbles entre les aiguilles principales 151, 152.

Le deuxième étage 160 de moyens de guidage est placé entre le premier étage 150 de guidage et la première articulation 200. Il a pour fonction de guider et étager selon l'axe en z, les câbles 112, 114 ; 122, 124 ; 132, 134 et 142, 144 en entrée de l'articulation 200 afin d'éviter tout contact entre ces câbles. Plus précisément les moyens de guidage 160 ont également pour fonction de répartir les câbles 112, 114 ; 122, 124 ; 132, 134 et 142, 144 en deux groupes de 4, respectivement supérieur et inférieur en référence à l'axe z, comme on le voit sur la figure 7.

On retrouve le groupe supérieur de 4 câbles 112, 122, 132 et 142 sur la figure 16bis et le groupe inférieur de 4 câbles 114, 124, 134 et 144 sur la figure 16ter.

Selon le mode de réalisation représenté sur les figures les moyens de guidage 160 sont formés d'aiguilles cylindriques s'étendant selon des axes parallèles à l'axe y portées par la poutre 104.

Selon le mode de réalisation préférentiel mais non limitatif représenté sur la figure 7 le dispositif comprend ainsi 4 étages d'aiguilles auxiliaires 162, 164, 166 et 168 qui guident les câbles 112, 114 ; 122, 124 ; 132, 134 et 142, 144, afin d'assurer le positionnement attendu en entrée de l'articulation 200. La multiplicité des étages 162, 164, 166 et 168 est destinée à assurer un regroupement progressif des câbles dans les deux groupes précités sans risque de contact entre deux câbles.

La configuration précise et le nombre d'aiguilles composant les étages de guidage 162, 164, 166 et 168 peuvent faire l'objet de nombreux modes de réalisation et ne seront pas décrits plus en détail par la suite. L'on notera cependant que en combinaison les 4 étages de guidage 162, 164, 166 et 168 possèdent des aiguilles qui servent d'intercalaire entre chaque paire de deux câbles adjacents en sortie des moyens de guidage 160 et des aiguilles qui servent de labyrinthe à certains câbles en assurant successivement un appui externe, puis un appui interne, en référence à la hauteur en z de la poutre 104, à certains des câbles.

Il est de plus prévu de préférence, en sortie de l'étage de guidage 160, en amont de l'articulation 200, deux aiguilles secondaires 151bis, 152bis, parallèles aux aiguilles précitées 151 et 152, dont l'écartement correspond également sensiblement, au jeu fonctionnel près requis pour assurer une libre translation des câbles 112, 114 ; 122, 124 ; 132, 134 et 142, 144, au diamètre de ceux-ci, afin de garantir un bon positionnement des câbles 112, 114 ; 122, 124 ; 132, 134 et 142, 144 en entrée de l'articulation 200. Les deux aiguilles secondaires 151bis, 152bis sont également disposées symétriquement de part et d'autre du plan de symétrie en xz de la poutre 104 passant par le premier axe d'articulation 202.

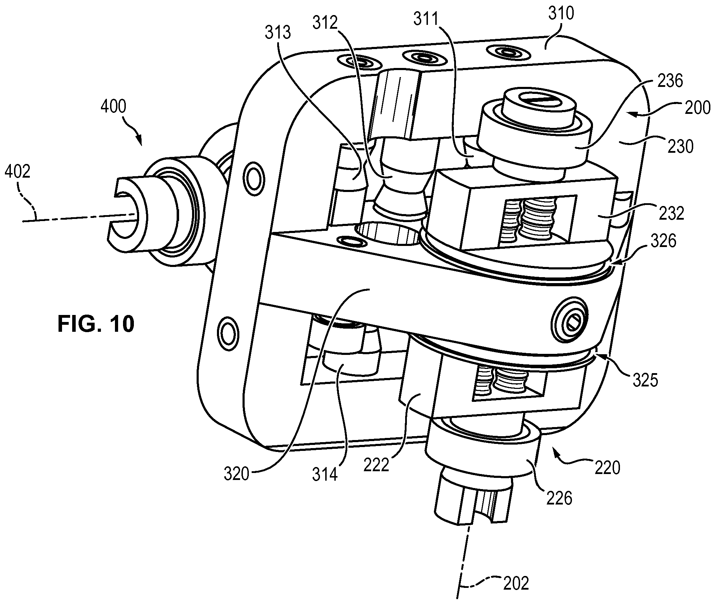

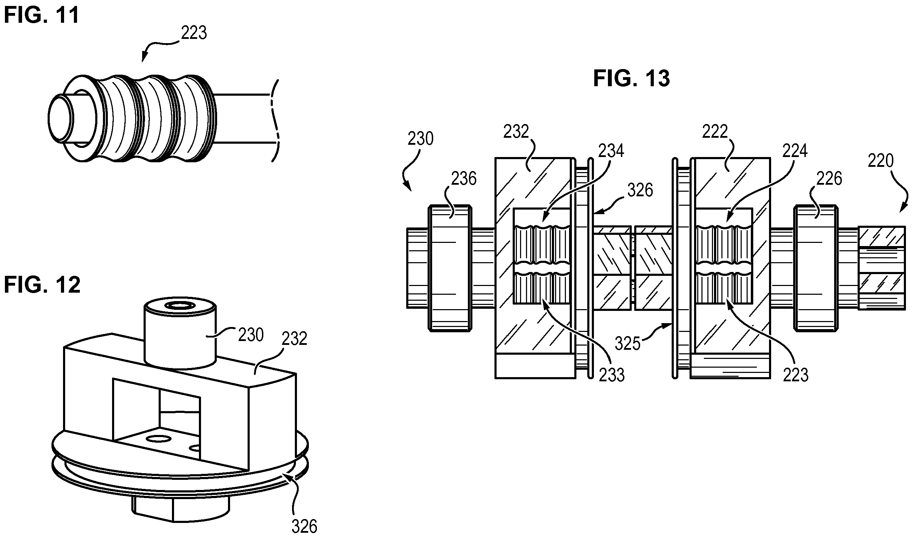

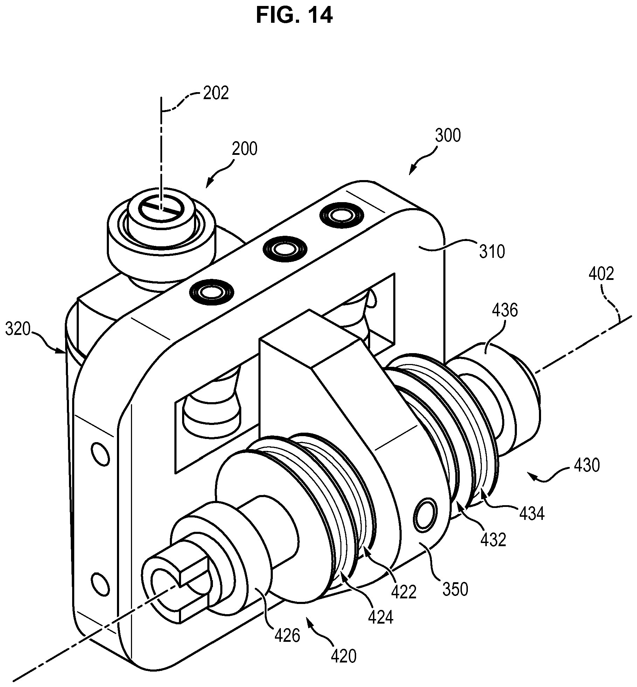

On va maintenant décrire la structure des deux premières articulations 200 et 400, particulièrement en regard des figures 10 à 16.

Comme indiqué précédemment de préférence la première articulation 200 correspond à une articulation en abduction-adduction autour d'un axe 202 en z, tandis que la deuxième articulation 400 correspond à une articulation en flexion-extension autour d'un axe 402 en y, c'est-à-dire non parallèle à l'axe 202 et de préférence orthogonal à cet axe 202. Les deux articulations 200 et 400 sont séparées et portées par un ensemble intermédiaire 300.

Le cas échéant en variante la première articulation 200 pourrait correspondre à une articulation en flexion-extension autour d'un axe 202 en y, tandis que la deuxième articulation 400 correspondrait à une articulation abduction-adduction autour d'un axe 402 en z.

Selon le mode de réalisation représenté sur les figures annexées l'ensemble intermédiaire 300 comprend un cadre support 310 dont le plan moyen s'étend, au repos c'est-à-dire en position centrée par rapport aux positions extrêmes d'abduction et d'adduction, dans un plan yz. Le cadre 310 porte respectivement sur ses deux faces opposés de part et d'autre du plan moyen en yz, l'articulation 200 d'abduction-adduction en z et l'articulation 400 de flexion-extension en y.

Plus précisément sur une première face le cadre 310 porte un pontet 320 en forme de dièdre dont le plan médian en épaisseur s'étend dans un plan en xy et qui supporte à rotation deux demis arbres ou tourillons 220, 230 coaxiaux en z d'abduction-adduction centrés sur l'axe 202. Les tourillons 220, 230 sont articulés sur l'embase 100, plus précisément sur l'extrémité de la poutre 104 par tout moyen approprié.

Les deux demis arbres ou tourillons 220, 230 sont situés respectivement de part et d'autre du pontet 320. L'un des tourillons 220 porte une poulie 325 réceptrice de la seconde extrémité du câble adduction 112. La poulie 325 est liée à rotation avec le pontet 320 et l'élément 300 et donc libre de rotation par rapport au tourillon 220. L'autre demi tourillon 230 porte une poulie 326 réceptrice de la seconde extrémité du câble abduction 114. La poulie 326 est également liée à rotation avec le pontet 320 et l'élément 300 et donc libre de rotation par rapport au tourillon 230.

Les points d'ancrage des câbles 112 et 114 sur leur poulie respective 325, 326 sont diamétralement opposés par rapport à l'axe 202.

En variante les câbles 112 et 114 peuvent être enroulés au moins partiellement autour des poulies 325, 326 comme schématisé sur les figures 16 bis et 16 ter, voire faire un tour complet autour de ces poulies, dans des sens respectivement opposés, et leurs secondes extrémités sont fixées sur le pontet 320 par tous moyens appropriés comme illustré en 330 et 340 sur les figures 16bis et 16ter. Dans ce cas les poulies 325 et 326 peuvent être libres de rotation par rapport au pontet 320, sur les tourillons 220, 230. De préférence les moyens de fixation 330, 340 sont munis de moyens de réglage en tension comme cela sera décrit par la suite pour les câbles 122, 124, 132, 134, 142 et 144.

Les extrémités des tourillons 220 et 230 portent des moyens 226, 236, tels que des roulements, formant paliers de guidage à rotation de l'extrémité adjacente de la poutre 104.

Entre les poulies 325, 326 et les paliers 226, 236, chaque tourillon 220, 230 porte une cage 222, 232 définissant chacune une fenêtre pour le passage et le guidage des câbles 122, 124 ; 132, 134 et 142, 144, dirigés vers les articulations avales 400, 600 et 800.

Plus précisément chaque cage 222, 232 possède deux séries de pièces tournantes, respectivement coaxiales, en forme de diabolo 223, 224 et 233, 234. Chaque série de pièces en forme de diabolo 223, 224 et 233, 234 est centrée sur un axe respectif en z. Les pièces en diabolo 223, 224 prévues dans la cage 222 sont symétriques par rapport à l'axe 202. De même les pièces en diabolo 233, 234 prévues dans la cage 232 sont symétriques par rapport à l'axe 202.

Chaque série de pièces en forme de diabolo 223, 224 et 233, 234 comporte par ailleurs un nombre de pièces en forme de diabolo égal au nombre de câbles à guider, respectivement 122, 132, 142 et 124, 134, 144.

Selon le mode de réalisation représenté sur les figures 10, 11 et 13, chaque demi tourillon 220, 230 guide trois câbles 122, 132, 142 et 124, 134, 144. En conséquence chaque série de pièces 223, 224 et 233, 234 en forme de diabolo comporte 3 pièces en forme de diabolo empilées axialement en z.

Sur l'axe 202 du mouvement d'abduction-adduction, il est donc prévu un jeu de 6 diabolos positionné sur la partie supérieure de l'axe pour guider les câbles 122, 132 et 142 comme illustré sur la figure 16bis et un jeu de 6 diabolos sur la partie inférieure de l'axe pour guider les câbles 124, 134 et 144 comme illustré sur la figure 16ter.

Chaque paire de deux diabolos adjacents appartenant aux deux séries de pièces 223, 224 et 233, 234 situées dans une cage commune 222, 232 définissent ainsi des passages respectifs destinés à recevoir les câbles 122, 132, 142 et 124, 134, 144. Chaque câble est ainsi guidé entre deux diabolos tournants.

Ces passages traversant selon un axe central respectif perpendiculaire au plan médian du cadre 310, ont un plan de symétrie qui passe par l'axe 202 quelle que soit la position relative de l'ensemble intermédiaire 300 vis-à-vis de l'embase 100, par rotation relative autour de l'axe 202.

Chaque diabolo est susceptible de rotation autour de son axe, sur une tige d'articulation centrale liée à la cage 222 ou 232, pour limiter les frictions entre les câbles 122, 132, 142 et 124, 134, 144 et les diabolos.

L'homme de l'art comprendra que le déplacement à rotation de l'actionneur 110 dans un sens applique un effort de traction sur le câble adduction 112 et par action sur la poulie 325 et/ou le pontet 320 conduit à un déplacement du doigt dans le sens de l'adduction (voir figure 16bis). Inversement le déplacement à rotation de l'actionneur 110 dans le sens inverse applique un effort de traction sur le câble abduction 114 et par action sur la poulie 326 et/ou le pontet 320 conduit à un déplacement du doigt dans le sens de l'abduction (voir figure 16ter).

Le cadre 310 porte par ailleurs 2 séries de 3 pièces en diabolos situées respectivement de part et d'autre du pontet 320 et destinées à guider les câbles 122, 124; 132, 134 et 142, 144 vers les articulations avales. Ces diabolos sont référencés 311, 312, 313 sur la figure 16bis et 314, 315, 316 sur la figure 16ter.

Comme on le voit sur les figures 16bis et 16ter, les câbles 112 et 114 peuvent également être guidés par des diabolos respectifs 180, 190 entre leur sortie de la porte définie par les deux aiguilles de guidage 151bis, 152bis et leur entrée sur les poulies réceptrices 325, 326.

Après leur passage à travers l'articulation 200 d'abduction-adduction, chacun des 6 câbles 122, 124 ; 132, 134 et 142, 144 est ainsi guidé via un diabolo 311, 312, 313 et 314, 315, 316 vers l'axe du premier mouvement 400 de flexion-extension. Parmi ces câbles 122, 124 ; 132, 134 et 142, 144, 2 câbles 122, 124 sont guidés respectivement vers des poulies 525, 526 réceptrices de la flexion et de l'extension, solidaires de l'axe du premier mouvement 400 de flexion-extension.

Par ailleurs le cadre 310 porte sur sa seconde face un pontet 350 en forme de dièdre dont le plan médian s'étend au repos dans un plan en xz et qui supporte à rotation deux demis arbres ou tourillons 420, 430 coaxiaux en y de flexion-extension centrés sur l'axe 402. Les tourillons 420, 430 sont articulés sur l'extrémité adjacente de la phalange 500 par tout moyen approprié.

Les deux demis arbres ou tourillons 420, 430 sont situés respectivement de part et d'autre du pontet 350. L'un des tourillons 420 porte deux poulies 422, 424 sur lesquelles les câbles 142 et 134 sont respectivement enroulés en parcourant un tour de ces poulies. L'autre demi tourillon 430 porte deux poulies 432, 434 sur lesquelles les câbles 144 et 132 sont respectivement enroulés en parcourant un tour de ces poulies. Les poulies 422, 424 et 432, 434 sont libres de rotation par rapport au pontet 350 autour de l'axe 402.

Le tour mort des câbles réalisé autour des poulies 422, 424 et 432, 434 de guidage, libres en rotation autour de leur axe, permet d'interdire que les câbles 132, 134 et 142, 144 ne sortent des poulies en fonction de la configuration articulaire du mouvement de flexion-extension des phalanges.

Les extrémités des tourillons 420 et 430 portent des moyens 426, 436, tels que des roulements, formant paliers de guidage à rotation de l'extrémité adjacente, par exemple en forme de chape 520, de la première phalange 500.

Par ailleurs la seconde extrémité des câbles 122, 124 est fixée sur cette extrémité de la première phalange 500, sur des côtés opposés de l'axe 402, comme on le voit sur la figure 15.

Plus précisément de préférence les deux branches 522, 524 de la chape 520 porte des poulies 525, 526 centrées sur l'axe 402, guidant la seconde extrémité respective des câbles 122, 124.

Les poulies 525, 526 doivent être liées à rotation avec la chape 520 si les extrémités des câbles 122, 124 sont fixées sur ces poulies.

Les poulies 525 et 526 peuvent être libres à rotation par rapport à la chape 520, autour de l'axe 402 si les extrémités des câbles 122, 124 sont fixées non pas sur les poulies précitées mais sur la chape 520.

A ce niveau de préférence l'extrémité de la première phalange 500 adjacente à l'articulation 400 possède de plus des moyens 530, 540 de réglage de la tension des câbles 122 et 124. Ces moyens de réglage 530, 540 peuvent faire l'objet de nombreux modes de réalisation.

Selon le mode de réalisation particulier représenté sur les figures annexées ces moyens de réglage 530, 540 comprennent chacun une fourchette 532, 542 qui reçoit l'extrémité d'un câble 122 et 124, par exemple une telle extrémité munie d'un noeud d'arrêt, et dont la distance à l'axe 402 peut être réglée par une vis 534, 544.

Comme on le voit sur la figure 17, des pions cylindriques 517 permettent de préférence le guidage des câbles 122 et 124 en sortie des poulies réceptrices 525, 526 vers les moyens 530, 540 de réglage fin de la tension des câbles 122, 124.

L'homme de l'art comprendra que le déplacement à rotation de l'actionneur 120 dans un sens applique un effort de traction sur le câble flexion 122 et par action sur l'extrémité de la phalange 500 conduit à un déplacement du doigt dans le sens de la flexion. Inversement le déplacement à rotation de l'actionneur 120 dans le sens inverse applique un effort de traction sur le câble extension 124 et par action sur l'extrémité de la phalange 500 conduit à un déplacement du doigt dans le sens d'une extension.

Finalement 4 câbles 132, 142 et 134, 144 sortent de la deuxième articulation, via 4 poulies dédiées 422, 424, 432 et 434, afin d'être acheminés respectivement vers les mouvements de flexion-extension de la phalange intermédiaire 700 et de flexion-extension de la phalange distale 900. Pour éviter que ces 4 câbles 132, 142 et 134, 144 ne sortent des poulies en fonction de la configuration articulaire du mouvement de flexion-extension de la phalange proximale 500, un tour mort sur ces poulies de guidage 422, 424, 432 et 434, libres en rotation sur l'axe du mouvement, est réalisé.

Les articulations 600 et 800 sont de préférence similaires à l'articulation 400 précitée.

Ainsi la seconde extrémité ou extrémité distale de chaque phalange 500 et 700 porte un pontet 550, 750 en forme de dièdre dont le plan médian s'étend dans un plan en xz et qui supporte à rotation deux demis arbres ou tourillons respectifs 620, 630 et 820, 830 coaxiaux en y de flexion-extension centrés sur les axes 602 et 802. Les tourillons 620, 630 et 820, 830 sont articulés sur l'extrémité adjacente de la phalange suivante 700, 900 par tout moyen approprié.

Les deux demis arbres ou tourillons 620, 630 sont situés respectivement de part et d'autre du pontet 550. Chaque tourillon 620, 630 porte une poulie 622, 632 sur lesquelles les câbles 142 et 144 sont respectivement enroulés en parcourant un tour de ces poulies. Les poulies 622, 632 sont libres de rotation par rapport au pontet 550 autour de l'axe 602.

Les extrémités des tourillons 620 et 630 portent de moyens 626, 636, tels que des roulements, formant paliers de guidage à rotation de l'extrémité adjacente, par exemple en forme de chape 720, de la deuxième phalange 700.

Par ailleurs la seconde extrémité des câbles 132, 134 est fixée sur cette extrémité de la deuxième phalange 700, sur des côtés opposés de l'axe 602.

Plus précisément de préférence les deux branches 722, 724 de la chape 720 porte des poulies 725, 726 centrées sur l'axe 602, guidant la seconde extrémité respective des câbles 132, 134.

A ce niveau de préférence l'extrémité de la deuxième phalange 700 adjacente à l'articulation 600 possède de plus des moyens 730, 740 de réglage de la tension des câbles 132 et 134, similaires aux moyens 530, 540 précités.

L'homme de l'art comprendra que le déplacement à rotation de l'actionneur 130 dans un sens applique un effort de traction sur le câble flexion 132 et par action sur l'extrémité de la phalange 700 conduit à un déplacement de cette phalange du doigt dans le sens de la flexion. Inversement le déplacement à rotation de l'actionneur 130 dans le sens inverse applique un effort de traction sur le câble extension 134 et par action sur l'extrémité de la phalange 700 conduit à un déplacement du doigt dans le sens d'une extension.

De façon similaire les deux demis arbres ou tourillons 820, 830 sont situés respectivement de part et d'autre du pontet 750.

Les extrémités des tourillons 820 et 830 portent de moyens 826, 836, tels que des roulements, formant paliers de guidage à rotation de l'extrémité adjacente, par exemple en forme de chape 920, de la troisième phalange 900.

Par ailleurs la seconde extrémité des câbles 142, 144 est fixée sur cette extrémité de la troisième phalange 900, sur des côtés opposés de l'axe 802.

Plus précisément de préférence les deux branches 922, 924 de la chape 920 porte des poulies 925, 926 centrées sur l'axe 802, guidant la seconde extrémité respective des câbles 142, 144.

A ce niveau de préférence l'extrémité de la troisième phalange 900 adjacente à l'articulation 800 possède de plus des moyens 930, 940 de réglage de la tension des câbles 142 et 144, similaires aux moyens 530, 540 précités.

L'homme de l'art comprendra que le déplacement à rotation de l'actionneur 140 dans un sens applique un effort de traction sur le câble flexion 142 et par action sur l'extrémité de la phalange 900 conduit à un déplacement de cette phalange du doigt dans le sens de la flexion. Inversement le déplacement à rotation de l'actionneur 140 dans le sens inverse applique un effort de traction sur le câble extension 144 et par action sur l'extrémité de la phalange 900 conduit à un déplacement du doigt dans le sens d'une extension.

Selon l'invention la transmission du mouvement entre chaque actionneur 110, 120, 130 et 140 et l'articulation respective 200, 400, 600 et 800 est réalisée par des câbles 112, 114 ; 122, 124 ; 132, 134 et 142, 144. Plus précisément il est prévu deux câbles de transmission pour chaque articulation 200, 400, 600 et 800. Chaque câble 112, 114 ; 122, 124 ; 132, 134 et 142, 144 est fixé d'une part, au niveau d'une poulie motrice 113, 115 ; 123, 125 ; 133, 135 et 143, 145 côté actionneur et d'autre part, au niveau d'une poulie réceptrice 325, 326, 525, 526, 725, 726, 925, 926 côté articulation.

Comme on l'a décrit précédemment les 3 phalanges d'un doigt conforme à l'invention sont réalisées sur le même principe. Ceci offre notamment les avantages suivants :

- possibilité de moduler la longueur de chaque phalange en fonction de l'application,
- possibilité de fixer un capotage,
- possibilité de router les signaux de l'instrumentation,
- possibilité d'intégrer une instrumentation de mesure de position et d'effort.

Le doigt précédemment décrit comprend un passage de câbles sur des poulies de guidage au niveau des articulations 400, 600 et 800. Il en résulte à ce niveau des variations de longueur des câbles induites par le déplacement en articulation des phalanges placées en aval.

Cependant les relations de couplage peuvent être calculées numériquement à partir des diamètres des poulies et les variations de longueur de câble induites peuvent être corrigées grâce à cette relation de couplage mécanique entre les articulations d'un doigt et les motoréducteurs correspondant, la relation de couplage étant du type :

$$Q = A \cdot Q'$$

dans laquelle

Q = [q1, q2, q3, q4] et représente les mouvements des articulations d'un doigt,
A représente la matrice de couplage du doigt et
Q* = [q1, q2, q3, q4] et représente les mouvements des motoréducteurs correspondants.

Ainsi toutes les articulations peuvent être contrôlées individuellement en prenant en compte les relations de couplage dans le contrôle en position du doigt.

La modularité dans la conception du doigt proposé selon l'invention permet un assemblage de plusieurs doigts 10 pour construire une main robotique à plusieurs doigts, jusqu'à une main anthropomorphe en terme de cinématique et de dimensions

La combinaison de plusieurs doigts 10 peut être faite en plaçant deux doigts 10 en regard ayant leurs axes 202 d'abduction-adduction coaxiaux, voire parallèles, pour réaliser par exemple une pince à deux doigts en vis-à-vis.

Comme illustré sur les figures 19 et 20 l'on peut cependant assembler sur une embase 100 commune formant paume, plusieurs doigts 10 ayant leurs premiers axes de flexion-extension 402 coaxiaux, et en regard un doigt 10 formant pouce, afin de proposer un dispositif permettant d'avoir le comportement d'une main naturelle, jusqu'à une main anthropomorphe.

On a illustré sur les figures 19 et 20 une main comprenant trois doigts 10a, 10b et 10c ayant leurs premiers axes de flexion-extension 402a, 402b et 402c coaxiaux et un pouce 10d dont l'axe d'abduction-adduction 202d s'étend en x, soit perpendiculairement au plan contenant les axes d'abduction-adduction 202a, 202b et 202c des doigts précités, tandis que ses axes de flexion-extension 402d, 602d et 802d s'étendent en y. Les doigts 10a, 10b et 10c et le pouce 10d illustrés sur les figures 19 et 20 portent des références numériques identiques à celles utilisées précédemment assorties respectivement des indices a, b, c et d.

Selon le mode de réalisation illustré sur la figure 19, les actionneurs 110d, 120d, 130d et 140d ont leurs axes orientés en x. Les câbles associés remontent en z jusqu'au sommet de l'embase, au niveau duquel lesdits câbles sont déviés à 90° par des poulies de renvoi appropriées 170 en direction de l'articulation 200d du pouce 10d.

La main ainsi obtenue permet toutes les manipulations que permet une main anthropomorphe, par exemple des prises par empaumement de tous diamètres, des prises en bout de doigts.

Dans le cadre de l'invention on entend par « actionnement complet », un mouvement de chaque articulation contrôlé finement en position et en effort et indépendamment des autres articulations du même doigt.

**Revendications**

1. Dispositif formant un doigt robotique comportant une embase (100) formant une paume, au moins une phalange (500, 700, 900) articulée sur l'embase (100) autour de deux articulations indépendantes (200, 400) non parallèles entre elles, au moins deux actionneurs (110, 120, 130, 140), des moyens de liaison à base de câble (112, 114 ; 122, 124 ; 132, 134 et 142, 144) reliant respectivement les deux actionneurs (110, 120) à des éléments d'entraînement (325, 326, 525, 526) desdites deux articulations (200, 400), et des moyens de guidage (150, 151, 152) adaptés pour guider les câbles (122, 124; 132, 134 et 142, 144) intervenant dans la commande de chaque articulation (400, 600, 800) située après la première articulation (200) sur l'embase (100), dans un plan commun passant par l'axe (202) de cette première articulation (200), **caractérisé en ce que** les moyens de guidage (150) sont formés d'aiguilles cylindriques s'étendant selon des axes parallèles au premier axe d'articulation (202), portées par l'embase (100), que le dispositif comprend au moins deux aiguilles (151, 152, 151bis, 152bis) en sortie d'un étage de guidage (150) dont l'écartement correspond sensiblement, au jeu fonctionnel près requis pour assurer une libre translation des câbles (112, 114 ; 122, 124 ; 132, 134 et 142, 144), au diamètre de ceux-ci, les deux aiguilles (151, 152, 151bis, 152bis) étant disposées symétriquement de part et d'autre d'un plan de symétrie passant par le premier axe d'articulation (202) et guidant les câbles en entrée de la première articulation, et que le dispositif comprend en outre un cadre (310) qui porte deux séries d'au moins une pièce en diabolo (224, 223, 234, 233) symétriques par rapport à l'axe de la première articulation et destinées à guider les câbles (122, 124 ; 132, 134 et 142, 144) en provenance de l'étage de guidage formé par lesdites aiguilles (151, 152, 151bis, 152bis) vers au moins une articulation avale (600, 800).

2. Dispositif selon la revendication 1, **caractérisé en ce que** le premier axe d'articulation (202) sur l'embase (100) constitue un axe d'abduction - adduction, tandis que le deuxième axe d'articulation (400) constitue un axe de flexion - extension.

3. Dispositif selon l'une des revendications 1 à 2, **caractérisé en ce qu'**il comprend un deuxième étage (160) de moyens de guidage placé entre le premier étage (150) de guidage et la première articulation (200) et dont la fonction est de guider et étager les câbles (112, 114 ; 122, 124 ; 132, 134 et 142, 144) en entrée de la première articulation (200) afin d'éviter tout contact entre ces câbles.

4. Dispositif selon l'une des revendications 1 à 3, **caractérisé en ce que** les extrémités de câbles (112, 114 ; 122, 124 ; 132, 134 et 142, 144) opposées aux actionneurs (110, 120, 130, 140) sont engagées sur des poulies réceptrices d'entraînement (325, 326, 525, 523, 725, 726, 925, 926) associées respectivement aux éléments avals (300, 500, 700, 900) des diverses articulations.

5. Dispositif selon l'une des revendications 1 à 4, **caractérisé en ce que** chaque câble (122, 124 ; 132, 134 et 142, 144) intervenant dans la commande d'une articulation (400, 600, 800) située après la première articulation (200) sur l'embase (100), est guidé entre deux diabolos tournants (224, 223, 234, 233).

6. Dispositif selon l'une des revendications 1 à 5, **caractérisé en ce que** la deuxième articulation (400) comprend deux demis arbres ou tourillons (420, 430) qui porte chacun deux poulies (422, 424, 432, 434) libres en rotation sur lesquelles les câbles (132, 134, 142, 144) sont respectivement enroulés en parcourant un tour de ces poulies.

7. Dispositif selon l'une des revendications 1 à 6, **caractérisé en ce qu'**il comprend des moyens 530, 540) de réglage de la tension des câbles (112, 114 ; 122, 124 ; 132, 134 et 142, 144).

8. Dispositif selon la revendication 7, **caractérisé en ce que** les moyens de réglage (530, 540) comprennent chacun un moyen (532, 542) de réception de l'extrémité d'un câble (112, 114 ; 122, 124 ; 132, 134 et 142, 144) et des moyens (534, 544) de réglage de la position de ce moyen de réception (532, 542) par rapport à son support (300, 500, 700, 900).

9. Dispositif selon l'une des revendications 1 à 8, **caractérisé en ce qu'**il comprend plusieurs phalanges (500, 700, 900) articulées entre elles deux à deux autour d'une articulation (600, 800) à axe unique associée à un actionneur respectif (130, 140).

10. Dispositif selon l'une des revendications 1 à 9, **caractérisé en ce que** la transmission de mouvement entre chaque articulation (200, 400, 600, 800) et l'actionneur associé (110, 120, 130, 140) est assurée par deux câbles de transmission (122, 124 ; 132, 134 et 142, 144), qui permettent d'assurer respectivement un mouvement de flexion ou d'abduction et un mouvement d'extension ou d'adduction.

11. Dispositif selon l'une des revendications 1 à 10, **caractérisé en ce qu'**il comprend une instrumentation complète de mesure d'effort et de position, notamment un moyen de mesure d'effort en bout de doigt.

12. Dispositif selon l'une des revendications 1 à 11, **caractérisé en ce qu'**il comprend plusieurs doigts (10a, 10b, 10c, 10d) formant une pince ou une main robotique à plusieurs doigts, par exemple une main anthropomorphe en termes de cinématique et de dimensions.

13. Dispositif selon l'une des revendications 1 à 12, **caractérisé en ce qu'**il comprend des moyens de mémorisation des relations de couplage des diverses articulations (400, 600, 800) induisant une variation de longueur dans leur chaîne de commande (122, 124 ; 132, 134 et 142, 144) lors de leur activation et de correction de la commande des actionneurs (110, 1120, 130, 140) en conséquence afin de neutraliser les variations de longueur de câble induites.

**Patentansprüche**

1. Roboterfingervorrichtung, enthaltend eine eine Handfläche bildende Basis (100), zumindest ein Fingerglied (500, 700, 900), das um zwei nicht parallel zueinander verlaufende, unabhängige Gelenke (200, 400) herum an die Basis (100) angelenkt ist, zumindest zwei Aktuatoren (110, 120, 130, 140), kabelbasierte Verbindungseinrichtungen (112, 114; 122, 124, 132, 134 und 142, 144), die die beiden Aktuatoren (110, 120) mit jeweiligen Antriebselementen (325, 326, 525, 526) zum Antreiben der beiden Gelenke (200, 400) verbinden, und Führungseinrichtungen (150, 151, 152), die dazu ausgebildet sind, die Kabel (122, 124; 132, 134 und 142, 144) zu führen, die bei der Steuerung eines jeden Gelenks (400, 600, 800) mitwirken, das sich nach dem ersten Gelenk (200) an der Basis (100) in einer gemeinsamen Ebene befindet, die durch die Achse (202) dieses ersten Gelenks (200) verläuft, **dadurch gekennzeichnet, dass** die Führungseinrichtungen (150) aus zylindrischen Stiften gebildet sind, die sich entlang von parallel zur ersten Gelenkachse (202) verlaufenden Achsen erstrecken und von der Basis (100) getragen werden, dass die Vorrichtung zumindest zwei Stifte (151, 152, 151bis, 152bis) am Ende einer Führungsstufe (150) enthält, deren Abstand im Wesentlichen dem Durchmesser der Kabel (112, 114; 122, 124; 132, 134 und 142, 144) auf das Betriebsspiel genau entspricht, das zum Sicherstellen einer freien Verschiebung der genannten Kabel erforderlich ist, wobei die Stifte (151, 152, 151bis, 152bis) beiderseits einer Symmetrieebene symmetrisch angeordnet sind, die durch die erste Gelenkachse (202) verläuft und die Kabel am Eingang des ersten Gelenks führen, und dass die Vorrichtung ferner einen Rahmen (310) enthält, welcher zwei Reihen aus zumindest einem doppelkegelartigen Teil (224, 223, 234, 233) trägt, die symmetrisch bezüglich der Achse des ersten Gelenks verlaufen und dazu bestimmt sind, die Kabel (122, 124; 132, 134 und 142, 144) von der von den Stiften (151, 152, 151bis, 152bis) gebildeten Führungsstufe kommend zu zumindest einem nachgelagerten Gelenk (600, 800) zu führen.

2. Vorrichtung nach Anspruch 1, **dadurch gekennzeichnet, dass** die erste Gelenkachse (202) an der Basis (100) eine Abduktions/Adduktions-Achse darstellt, während die zweite Gelenkachse (400) eine Beugungs-/Streckungs-Achse darstellt.

3. Vorrichtung nach einem der Ansprüche 1 bis 2, **dadurch gekennzeichnet, dass** sie eine zweite Stufe (160) von Führungseinrichtungen enthält, die zwischen der ersten Führungsstufe (150) und dem ersten Gelenk (200) angeordnet ist und deren Funktion darin besteht, die Kabel (112, 114; 122, 124; 132, 134 und 142, 144) am Eingang des ersten Gelenks (200) zu führen und stufenförmig anzuordnen, um jegliche Berührung zwischen diesen Kabeln zu vermeiden.

4. Vorrichtung nach einem der Ansprüche 1 bis 3, **dadurch gekennzeichnet, dass** die den Aktuatoren (110, 120, 130, 140) entgegengesetzten Enden der Kabel (112, 114; 122, 124; 132, 134 und 142, 144) in Eingriff mit Antriebs-/Abtriebsscheiben (325, 326, 525, 523, 725, 726, 925, 926) sind, die den jeweiligen nachgelagerten Elementen (300, 500, 700, 900) der verschiedenen Gelenke zugeordnet sind.

5. Vorrichtung nach einem der Ansprüche 1 bis 4, **dadurch gekennzeichnet, dass** jedes Kabel (122, 124; 132, 134 und 142, 144), das bei der Steuerung eines nach dem ersten Gelenk (200) an der Basis (100) befindlichen Gelenks (400, 600, 800) mitwirkt, zwischen zwei drehbaren Doppelkegel (224, 223, 234, 233) geführt wird.

6. Vorrichtung nach einem der Ansprüche 1 bis 5, **dadurch gekennzeichnet, dass** das zweite Gelenk (400) zwei Halbwellen bzw. Zapfen (420, 430) enthält, die jeweils zwei frei drehbare Scheiben (422, 424, 432, 434) trägt, um welche die jeweiligen Kabel (132, 134, 142, 144) herum gelegt sind und dabei einmal um diese Scheiben umlaufen.

7. Vorrichtung nach einem der Ansprüche 1 bis 6, **durch gekennzeichnet, dass** sie Einstelleinrich-

tungen (530, 540) zum Einstellen der Spannung der Kabel (112, 114; 122, 124; 132, 134 und 142, 144) enthält.

8. Vorrichtung nach Anspruch 7, **dadurch gekennzeichnet, dass** die Einstelleinrichtungen (530, 540) jeweils eine Aufnahmeeinrichtung (532, 542) zum Aufnehmen von dem Endes eines Kabels (112, 114; 122, 124; 132, 134 und 142, 144) sowie Einstelleinrichtungen (534, 544) zum Einstellen der Position dieser Aufnahmeeinrichtung (532, 542) bezüglich ihres Trägers (300, 500, 700, 900) enthalten.

9. Vorrichtung nach einem der Ansprüche 1 bis 8, **dadurch gekennzeichnet, dass** sie mehrere Fingerglieder (500, 700, 900) enthält, die um ein einem jeweiligen Aktuator (130, 140) zugeordnetes, einachsiges Gelenk (600, 800) herum paarweise aneinander angelenkt sind.

10. Vorrichtung nach einem der Ansprüche 1 bis 9, **dadurch gekennzeichnet, dass** die Bewegungsübertragung zwischen jedem Gelenk (200, 400, 600, 800) und dem zugeordneten Aktuator (110, 120, 130, 140) über zwei Übertragungskabel (122, 124; 132, 134 und 142, 144) sichergestellt wird, mit denen jeweils eine Beugungs- oder Abduktionsbewegung bzw. eine Streckungs- oder Adduktionsbewegung sichergestellt werden kann.

11. Vorrichtung nach einem der Ansprüche 1 bis 10, **dadurch gekennzeichnet, dass** sie eine vollständige Kraft- und Positionsmessgeräteausrüstung enthält, insbesondere eine Messeinrichtung zum Messen der Fingerspitzenkraft.

12. Vorrichtung nach einem der Ansprüche 1 bis 11, **dadurch gekennzeichnet, dass** sie mehrere Finger (10a, 10b, 10c, 10d) enthält, die eine Roboterkralle bzw. -hand mit mehreren Fingern bildet, beispielsweise eine hinsichtlich der Kinematik und der Abmessungen anthropomorphe Hand.

13. Vorrichtung nach einem der Ansprüche 1 bis 12, **dadurch gekennzeichnet, dass** sie Einrichtungen zum Abspeichern der Kopplungsverhältnisse der verschiedenen Gelenke (400, 600, 800), die eine Längenänderung in ihrer Steuerkette (122, 124; 132, 134 und 142, 144) bei deren Aktivierung hervorrufen, und zur entsprechenden Korrektur bei der Steuerung der Aktuatoren (110, 120, 130, 140) enthält, um die hervorgerufenen Kabellängenänderungen zu kompensieren.

**Claims**

1. Device forming a robotic finger comprising a base (100) forming a palm, at least one phalange (500, 700, 900) articulated to the base (100) about two independent articulations (200, 400) not parallel to one another, at least two actuators (110, 120, 130, 140), cable-based linking means (112, 114; 122, 124; 132, 134 and 142, 144) respectively connecting the two actuators (110, 120) to drive elements (325, 326, 525, 526) of said two articulations (200, 400), and guide means (150, 151, 152) suitable for guiding the cables (122, 124; 132, 134 and 142, 144) involved in the control of each articulation (400, 600, 800) situated after the first articulation (200) on the base (100), in a common plane passing through the axis (202) of this first articulation (200), **characterized in that** the guide means (150) are formed from cylindrical rods extending along axes parallel to the first axis of articulation (202), that are borne by the base (100), **in that** the device comprises at least two rods (151, 152, 151bis, 152bis) at the exit of a guiding stage (150) the separation of which substantially corresponds to the required close working clearance in order to ensure a free translation of the cables (112, 114; 122, 124; 132, 134 and 142, 144), at the diameter thereof, the two rods (151, 152, 151bis, 152bis) being arranged symmetrically on either side of a plane of symmetry passing through the first axis of articulation (202) and guiding the cables at the entry of the first articulation, and that the device moreover comprises a frame (310) which bears two series of at least one double conical roller part (224, 223, 232, 233) symmetrical with respect to the axis of the first articulation and intended to guide the cables (122, 124; 132, 134 and 142, 144) originating from the guiding stage formed by said rods (151, 152, 151bis, 152bis) towards at least one downstream articulation (600, 800).

2. Device according to claim 1, **characterized in that** the first axis of articulation (202) on the base (100) constitutes an abduction-adduction axis, while the second axis of articulation (400) constitutes a flexion-extension axis.

3. Device according to one of claims 1 to 2, **characterized in that** it comprises a second stage (160) of guide means placed between the first guiding stage (150) and the first articulation (200) and the function of which is to guide and arrange the cables (112, 114; 122, 124; 132, 134 and 142, 144) at the entry of the first articulation (200) in order to avoid any contact between these cables.

4. Device according to one of claims 1 to 3, **characterized in that** the ends of cables (112, 114; 122, 124; 132, 134 and 142, 144) opposite to the actuators (110, 120, 130, 140) are engaged in receiving drive pulleys (325, 326, 525, 523, 725, 726, 925, 926) associated respectively with the downstream elements (300, 500, 700, 900) of the various articulations.

5. Device according to one of claims 1 to 4, **characterized in that** each cable (122, 124; 132, 134 and 142, 144) involved in the control of an articulation (400, 600, 800) situated after the first articulation (200) on the base (100), is guided between two rotating double conical rollers (222, 223, 232, 233).

6. Device according to one of claims 1 to 5, **characterized in that** the second articulation (400) comprises two half-shafts or pins (420, 430) each of which bears two pulleys (422, 424, 432, 434) free in rotation on which the cables (132, 134, 142, 144) are respectively wound by making one turn around these pulleys.

7. Device according to one of claims 1 to 6, **characterized in that** it comprises means (530, 540) for adjusting the tension of the cables (112, 114; 122, 124; 132, 134 and 142, 144).

8. Device according to claim 7, **characterized in that** the adjustment means (530, 540) each comprise a mean (532, 542) for receiving the end of a cable (112, 114; 122, 124; 132, 134 and 142, 144) and means (534, 544) for adjusting the position of this receiving mean (532, 542) with respect to its support (300, 500, 700, 900).

9. Device according to one of claims 1 to 8, **characterized in that** it comprises several phalanges (500, 700, 900) articulated to one another two by two about a single-axis articulation (600, 800) associated with a respective actuator (130, 140).

10. Device according to one of claims 1 to 9, **characterized in that** the transmission of movement between each articulation (200, 400, 600, 800) and the associated actuator (110, 120, 130, 140) is ensured by two transmission cables (122, 124; 132, 134 and 142, 144), which make it possible to ensure respectively a flexion or abduction movement and an extension or adduction movement.

11. Device according to one of claims 1 to 10, **characterized in that** it comprises complete instrumentation for measuring force and position, in particular a mean for measuring force at the fingertip.

12. Device according to one of claims 1 to 11, **characterized in that** it comprises several fingers (10a, 10b, 10c, 10d) forming a robotic gripper or hand with several fingers, for example an anthropomorphic hand in terms of kinematics and dimensions.

13. Device according to one of claims 1 to 12, **characterized in that** it comprises means for storing in memory the coupling relationships of the various articulations (400, 600, 800) leading to a variation in the length of their control channel (122, 124; 132, 134 and 142, 144) during their activation, and consequently correcting the control of the actuators (110, 1120, 130, 140) in order to cancel out the resulting variations in cable length.

FIG. 1

FIG. 2

FIG. 3

FIG. 4

EP 3 206 841 B1

**FIG. 5**

## FIG. 6

## FIG. 7

**FIG. 8**

**FIG. 9**

FIG. 10

EP 3 206 841 B1

FIG. 13

FIG. 11

FIG. 12

**FIG. 14**

## FIG. 15

## FIG. 16

## FIG. 16bis

## FIG. 16ter

FIG. 17

EP 3 206 841 B1

**FIG. 18**

FIG. 19

EP 3 206 841 B1

FIG. 20

EP 3 206 841 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GREBENSTEIN M.** Approaching human performance: the functionality driven Awiwi Robot Hand. *Diss. ETH N°20471,* 2012
- **IVERSEN E.K. ; KHUTTI D.F. ; JOHNSON R.T. ; BIGGERS K.B. ; JACOBSEN S.C.** Design of the UTAH/MIT dexterous hand. *International Conference on Robotics and Automation,* 1986, 1520-1532
- **LIU et al.** Multisensory Five-Finger Dexterous Hand: The DLR/HIT Hand II. *IEEE/RSJ International Conference on Intelligent Robots and Systems,* 2008
- **S. UEKI ; H. KAWASAKI ; T. MOURI.** Adaptive Coordinated Control of Multi-Fingered Robot Hand. *Journal of Robotics and Mechatronics,* 2009, vol. 21 (1
- **JUN UEDA ; YUTAKA ISHIDA ; MASAHIRO KONDO ; TSUKASA OGASAWARA.** Development of the NAIST-Hand with Vision-based Tactile Fingertip Sensor. *Proceedings of the 2005 IEEE International Conference on Robotics and Automation (ICRA 2005),* 2005, 2343-2348
- **N. DAOUD, J.P. GAZEAU ; S. ZEGHLOUL ; M. ARSICAULT.** A real-time strategy for dexterous manipulation: Fingertips motion planning, force sensing and grasp stability. *Journal of Robotics and Autonomous Systems,* Mars 2012, vol. 60, 377-386

- **J.P. GAZEAU ; S. ZEGHLOUL ; G. RAMIREZ.** Manipulation with a polyarticulated mechanical hand: a new efficient real-time method for computing fingertip forces for a global manipulation strategy. *Robotica,* 2005, vol. 23, 479-490
- **D. CHAIGNEAU ; M. ARSICAULT ; J.P. GAZEAU ; S. ZEGHLOUL.** LMS robotic hand grasp and manipulation planning (an isomorphic skeleton approach. *Robotica (2008),* 2008, vol. 26, 177-188
- **N. DAOUD ; J.P. GAZEAU ; S. ZEGHLOUL ; M. ARSICAULT.** A fast grasp synthesis method for online manipulation. *Journal of Robotics and Autonomous Systems,* 2011, vol. 59, 421-427
- **F. TOUVET ; N. DAOUD ; J.P. GAZEAU ; S. ZEGHLOUL ; M.A. MAIER ; S. ESKIIZMIRLILER.** A biomimetic reach and grasp approach for mechanical hand. *Journal of Robotics and Autonomous Systems,* 2012, vol. 60, 473-486
- **HASHIMOTO H et al.** AN UNILATERAL MASTER-SLAVE HAND SYSTEM WITH A FORCE-CONTROLLED SLAVE HAND. *PROCEEDINGS OF THE INTERNATIONAL CONFERENCE ON ROBOTICS AND AUTOMATION,* 21 Mai 1995
- PROCEEDINGS OF THE INTERNATIONAL CONFERENCE ON ROBOTICS AND AUTOMATION. IEEE, 21 Mai 1995, 956-961